(19) Europäisches Patentamt
European Patent Office
Office européen des brevets

(11) **EP 1 967 077 B1**

## (12) EUROPEAN PATENT SPECIFICATION

(45) Date of publication and mention
of the grant of the patent:
**02.09.2015 Bulletin 2015/36**

(51) Int Cl.:
*A23G 9/38* *(2006.01)*   *A23L 1/20* *(2006.01)*

(21) Application number: **08151522.3**

(22) Date of filing: **15.02.2008**

(54) **Frozen aerated product comprising soy protein**

Gefrorenes, mit Luft durchsetztes Produkt mit Sojaprotein

Produit aéré surgelé avec protéines de soja

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.02.2007 EP 07250787**

(43) Date of publication of application:
**10.09.2008 Bulletin 2008/37**

(73) Proprietors:
• **Unilever PLC**
**London**
**EC4Y 0DY (GB)**
Designated Contracting States:
**CY GB IE MT**
• **Unilever N.V.**
**3013 AL Rotterdam (NL)**
Designated Contracting States:
**AT BE BG CH CZ DE DK EE ES FI FR GR HR HU
IS IT LI LT LU LV MC NL NO PL PT RO SE SI SK TR**

(72) Inventors:
• **Cox, Andrew Richard**
**Bedford, Bedfordshire MK44 1LQ (GB)**
• **Turan, Susan Margaret**
**Englewood Cliffs,**
**New Jersey, 07632 (US)**
• **Waudby, Mary Lafone**
**Bedford, Bedfordshire MK40 4ED (GB)**

(74) Representative: **Acham, Nicholas Clive**
**Unilever PLC**
**Unilever Patent Group**
**Colworth House**
**Sharnbrook**
**Bedford, Bedfordshire MK44 1LQ (GB)**

(56) References cited:
EP-A- 0 086 032      EP-A- 0 271 963
EP-A- 0 664 084      EP-B1- 1 494 545
WO-A-2004/105508   DE-U1- 20 300 380

• FRIEDECK K: "Soy protein fortification of a low-
fat dairy-based ice cream" FOOD CHEMISTRY
AND TOXICOLOGY, vol. 68, no. 9, 2003, pages
2651-2657, XP002488874
• OBIS P: "Scoop on the new soy "ice cream""
VEGETARIAN TIMES, [Online] no. 94, 1985, pages
44-47, XP002488875 USA Retrieved from the
Internet: URL:http://www.fao.org/agris/search/
displa y.do;
jsessionid=E3F64AFAED107E0804EC0129BB
856BFD?f=./1986/v1212/US8632109.xml;US8632
109>
• DATABASE WPI Week 198805 Thomson
Scientific, London, GB; AN 1988-033583
XP002451012 & JP 62 294040 A (TAKAI
SEISAKUSHO KK) 21 December 1987
(1987-12-21)
• PELAN B M C ET AL: "The stability of aerated milk
protein emulsions in the presence of small
molecule surfactants" JOURNAL OF DAIRY
SCIENCE, US, vol. 80, no. 10, 1997, pages
2631-2638, XP008030810 ISSN: 0022-0302

Remarks:
The file contains technical information submitted after
the application was filed and not included in this
specification

**Description**

The present invention relates to a frozen aerated product comprising a soy product, which comprises soy protein and less than 25 weight-% (wt-%), based on the total weight of the soy product, of soy fat and at least one destabilising emulsifier: as well as to a process for the production of such a frozen aerated product.

Cardiovascular disease is a leading cause of morbidity and mortality, particularly in the United States and in Western European countries and is emerging in developing countries. Several factors are mentioned relation to the development of cardiovascular disease including hereditary predisposition to the disease, gender, lifestyle factors such as smoking and diet, age, hypertension, and hyperlipidemia, including hypercholesteremia. Several of these factors, particularly hyperlipidemia and hypercholesteremia, contribute to the development of atherosclerosis, a primary cause of vascular and heart disease.

Elevated low-density lipoprotein cholesterol (hereafter "LDL-cholesterol") is directly related to an increased risk of coronary heart disease.

The presence of soy protein in food consumed by humans is associated with a lower level of low-density lipoprotein cholesterol (LDL-cholesterol) and lower risk of coronary heart disease.

Food products comprising soy protein are well known. Examples of food products that may comprise soy protein are meat products, baked products, food analogs and dairy products. Types of soy proteins and food uses of soy proteins are described in Waggle, D. H. and Kolar, C. W., Soy protein and human nutrition, proceedings of a symposium held May 222-25, 1978 in Keystone Colourado, pages 19-51.

Soy protein materials are known to reduce total cholesterol and LDL-cholesterol levels in the blood of animals. An analysis of the effects of soy protein intake on serum lipids in humans has shown that dietary soy protein is significantly related to lowering serum concentrations of total cholesterol and LDL-cholesterol in humans (Anderson, Johnstone, and Cook-Newell, N. Engl. J. Med., Vol. 333, No. 5, pp. 276-82 (1995)).

Frozen aerated products such as ice cream contains usually 4 - 12 wt-% milk solids not fat (MSNF, which contains casein micelles, whey proteins and lactose). The aim is to replace the MSNF by proteins originated from soy beans.

Soy protein fortification of a low-fat dairy-based ice cream is described in Friedeck et al. Journal of Food Science 2003, vol 68, pages 2651-7.

EP 0 086 032 discloses a stabilizer for frozen emulsion foams which comprises a water dispersable protein which may be soy isolate or soy concentrate.

EP 0 271 963 discloses protein-containing food compositions, including frozen dairy desserts, wherein the protein may be soy protein.

In terms of product quality, this is related to the microstructural stability of the aerated frozen product and its melting behaviour in-mouth. Typically, a high quality ice cream product, for example, would be slow melting when consumed. This behaviour also provides the perception of warmer eating and a more creamy mouth feel, both of which are indicative of a favourable product.

In dairy ice cream, the product stability and melting behaviour are improved by formulation and process routes which lead to greater proportions of de-stabilised fat: this manifests itself in terms of fat particles adsorbed to air bubbles and fat particles partially coalesced in the continuous phase. Increasing levels of de-stabilised fat lead to a more stable air phase and slower product melting. However, high levels of de-stabilised fat may lead to air phase instabilities and the formation of large fat particles during the processing of ice cream ("buttering"). Therefore, this needs to be controlled.

For the case of ice cream comprising soy protein as opposed to dairy protein, the melting behaviour is more difficult to improve. This is because the amount of de-stabilised fat produced in products comprising soy protein tends to be relatively low (much less then 30%), and arises from what we believe to be an increased stability of the fat phase to shear and aeration when soy protein is used as the principal emulsion stabiliser. As a result, typical problems, which result when using soy proteins in a frozen aerated product are:

(i) A poor texture of the frozen aerated product resulting from reduced product stability in the cold chain, and
(ii) A poor (fast) melting behaviour of the frozen aerated product.

The textural changes and the poor melting behaviour will lead to a more undesirable product which melts too rapidly, is colder eating, and more icy in mouth. Additionally, such a frozen aerated product melts very quickly in the hand of a consumer, which is not appreciated either.

Therefore the goal of the present invention is to provide a frozen aerated product, with soy proteins (instead of milk protein) which has a good texture as a well as a good meltdown behaviour.

Surprisingly it has been found out that a frozen aerated product comprising a soy product which comprises (i) soy protein and (ii) less than 25 weight-% (wt-%), based on the total weight of the soy product, of soy fat and wherein the frozen aerated product comprises at least one destabilising emulsifier which is an unsaturated monoglyceride, has a good texture as well as a good meltdown behaviour.

Therefore the present invention relates to a frozen aerated product comprising a soy product, which comprises (i) soy protein and (ii) less than 25 weight-% (wt-%), based on the total weight of the soy product, of soy fat, characterized in that the frozen aerated product comprises at least one destabilizing emulsifier which is an unsaturated monoglyceride.

The term "aerated" means that gas has been intentionally incorporated into the composition, for example by mechanical means. The gas can be any gas, but is preferably, particularly in the context of food products, a food-grade gas such as air, nitrogen, nitrous oxide, or carbon dioxide. The extent of aeration is defined in terms of "overrun". In the context of the present invention, %overrun is defined in volume terms as:

$$((\text{volume of aerated product} - \text{volume of mix}) / \text{volume of mix}) \times 100$$

where the volumes are the volumes of a fixed mass of product / mix respectively.

Preferably, the frozen aerated product according to the present invention is essentially free from milk proteins.

The soy product can be any soy material as long as the soy fat content is less that 25wt-% based on the total weight of the soy product. Preferably the fat content is less than 23 wt-%.

The soy product can be for example whole bean flour, soy protein concentrate or soy protein isolate. It is also possible to use mixtures of such soy products.

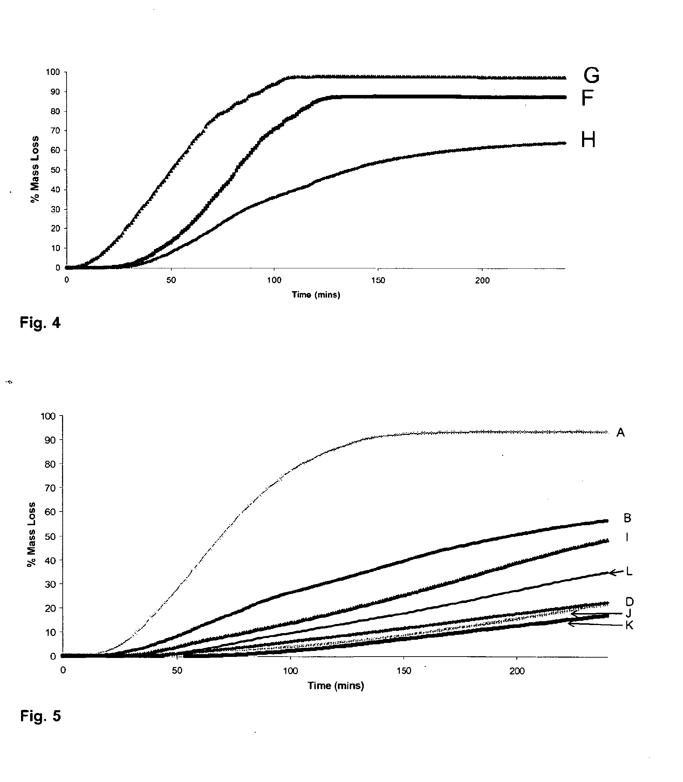

Destabilising emulsifier means any emulsifier which gives, at a level of 0.3%, a level of extracted fat of at least 25% in an ice cream premix containing 12% butter oil, 13% skim milk powder and 15% sucrose as described in relation to Figure 4 in 'The stability of aerated milk protein emulsions in the presence of small molecule surfactants' 1997 - Journal of Dairy Science 80, pages 2631-2638. In this test the milk proteins are dissolved in deionized water at 60°C. The emulsifier is added to the fat phase prior to melting in a 60°C water bath and added to the water phase; then, this pre-emulsion is heated to 65°C. The emulsions are homogenized at an operating pressure of 140 bar and a temperature of 65°C. After the emulsions are cooled to 5°C, they are stored at this temperature for 3 d before tests are carried out. The orthokinetic stability of the premixes is determined by shearing the emulsions (200 ml) at a constant speed (900 rpm) and at a fixed temperature (15°C) in the presence of air, using an experimental design, which has been described previously (Page 215 in Food Macromolecules and Colloids. E. Dickinson and D. Lorient, ed. R. Soc. Chem., Cambridge, UK). The relative destabilization after 50 min of shear is determined by a solvent extraction technique using petroleum spirit (Fischer Scientific, Loughborough, United Kingdom). This technique is described for example on pages 114-115 of "The Science of Ice Cream", C. Clarke, R. Soc. Chem., Cambridge, United Kingdom, 2004. Approximately 10g of mix or melted ice cream and 30ml of a solvent, such as heptane, are placed in a flask. The flask is rapidly rotated to dissolve the de-stabilised fat in the solvent and then left to stand so that the solvent separates out. The solution of the fat in the solvent is then decanted, and the solvent is removed by drying. The mass of the remainder, *i.e.* the extracted fat, is determined ($m_{extracred}$) and expressed as a percentage of the total mass of fat ($m_{total}$).

$$\text{extracted fat}(\%) = \frac{m_{extracted}}{m_{total}} \times 100$$

A higher amount of extractable (or destabilized) fat indicates a less stable emulsion, and hence a more destabilising emulsifier, because more fat has coalesced. Examples of such destabilising emulsifiers are unsaturated monoglyceride, polyglycerol esters, sorbitan esters, stearoyl lactylate, lactic acid esters, citric acid esters, acetyllated monoglyceride, diacetyl tartaric acid esters and propylene glycol esters.

In the present invention the destabilizing emulsifier is an unsaturated monoglyceride.

Therefore an embodiment of the present invention relates to a frozen aerated product comprising a soy product, which comprises (i) soy protein and (ii) less than 25 weight-% (wt-%), based on the total weight of the soy product, of soy fat, characterized in that the frozen aerated product comprises at least one destabilizing emulsifier chosen from the group consisting of unsaturated monoglyceride.

It is also possible to use a mixture of at least one destabilizing emulsifier and at least one non-destabilizing emulsifier. The term non-destabilising emulsifier covers all the emulsifiers, which do not fall under our definition of destabilizing emulsifier given above, for example saturated mono/di glycerides.

Soy can be sourced as whole bean, concentrate, protein isolate and soy milk powder and all are appropriate for use in ice cream, however the soy protein isolate is the preferred ingredient since it generally has lower viscosity and cleaner flavour (since carbohydrates are removed). The soy fat content must be lower that 25 wt-%, based on the total weight of the soy product. All ingredients are widely available with the following (table 1) typical breakdown of nutrients:

**Table 1:** Sources of soy proteins

|  | Protein [wt-%] | Fat [wt-%] | Carbohydrate [wt-%] |
|---|---|---|---|
| Whole bean flour | 42 | 20 | 33 |
| Soy protein concentrate | 70 | 1 | 23 |
| Soy protein isolate | 85 | 4 | 0 |

A frozen aerated product according to the present invention can comprise up to 25 wt-%, based on the total weight of the frozen aerated product, of a soy product as described above.

In a frozen aerated product the content of the soy protein can be up to 10 wt-%, based on the total weight of the frozen aerated product. Due to the fact that different sources of soy protein have a different amount of soy protein content, the amount of the soy product which has to be used to reach the same level of soy protein can vary. A preferred range of the soy protein content in a frozen aerated product is 0.5 - 10 wt-% based on the total weight of the frozen aerated product.

A frozen aerated product according to the present invention can comprise up to 1 wt-%, based on the total weight of the frozen aerated product, of at least one destabilizing emulsifier. A preferred range of the destabilizing emulsifier in a frozen aerated product is 0.05 - 1 wt-% based on the total weight of the frozen aerated product.

A frozen aerated product can be for example an ice cream, a sherbet, a sorbet or a frozen yoghurt. Preferably the frozen aerated product is an ice cream.

The aerated products such as ice cream, sherbet, sorbet or frozen yoghurt, can further comprise any ingredient which is necessary or desired to obtain such a product.

Such ingredients are fats/oils; sugars, such as sucrose, fructose, dextrose, lactose, corn syrups, sugar alcohols; salts; colours and flavours; fruit or vegetable purees, extracts, pieces or juice; stabilisers or thickeners, such as polysaccharides, e.g. locust bean gum, guar gum, carrageenan, microcrystalline cellulose; and inclusions such as chocolate, caramel, fudge, biscuit or nuts.

Coconut oil, palm oil, palm oil fraction, sunflower oil, soybean oil, and butter fat are the most common oils/fats used in the ice cream production.

Therefore the present invention relates to an ice cream, a sherbet, a sorbet or a frozen yoghurt comprising

(I) 0.5 - 25wt-%, based on the total weight of the frozen aerated product, of a soy product, which comprises (i) soy protein and (ii) less than 25 wt%, based on the total weight of the soy product, of soy fat, and
(II) 0.05 - 1 wt-%, based on the total weight of the frozen aerated product, of at least one destabilizing emulsifier which is an unsaturated monoglyceride,

with the proviso that the total content of the soy protein is 0.5 - 10 wt-%, based on the total weight of the ice cream, sherbet, sorbet or frozen yoghurt.

Therefore the present invention relates to an ice cream, a sherbet, a sorbet or a frozen yoghurt comprising

(I) 0.5 - 25wt-%, based on the total weight of the frozen aerated product, of a soy product, which comprises (i) soy protein and (ii) less than 25 wt-%, based on the total weight of the soy product, of soy fat, and
(II) 0.05 - 1 wt-%, based on the total weight of the frozen aerated product, of at least one destabilizing emulsifier chosen from the group consisting of unsaturated monoglyceride,

with the proviso that the total content of the soy protein is 0.5 - 10 wt-%, based on the total weight of the ice cream, sherbet, sorbet or frozen yoghurt.

A further embodiment of the present invention relates to an ice cream, a sherbet, a sorbet or a frozen yoghurt comprising

(I) 0.5 - 25wt-%, based on the total weight of the ice cream, the sherbet, the sorbet or the frozen yoghurt, of a soy product, which comprises (i) soy protein and (ii) less than 25 wt-%, based on the total weight of the soy product, of soy fat, and
(II) 0.05 - 1 wt-%, based on the total weight of the ice cream, the sherbet, the sorbet or the frozen yoghurt, of at least one destabilising emulsifier which is an unsaturated monoglyceride, and
(III) 0 - 18 wt-%, based on the total weight of the ice cream, the sherbet, the sorbet or the frozen yoghurt, of at least one fat/oil, such as coconut oil, palm oil, palm oil fraction, sunflower oil, soybean oil and/or butter fat, and

(IV) 15- 30 wt-%, based on the total weight of the ice cream, the sherbet, the sorbet or the frozen yoghurt, of at least one sugar, such as sucrose, fructose, dextrose, lactose, corn syrups and/or sugar alcohols, and

(V) 40 - 72 wt-%, based on the total weight of the ice cream, the sherbet, the sorbet or the frozen yoghurt, of water, and

(VI) 0.1 - 5 wt-%, based on the total weight of the ice cream, of at least one further ingredient such as stabilisers and/or flavourings,

with the proviso that the total content of the soy protein is 0.5 - 10 wt-%, based on the total weight of the ice cream, sherbet, sorbet or frozen yoghurt.

The amount of overrun present in the product will vary depending on the desired product characteristics. The overrun is at least 10%, preferably at least 25 or 50%. Preferably the amount of overrun is less than 400%, more preferably less than 300 or 200%. For frozen aerated products, the overrun is most preferably from 70 to 150%.

Any commonly used process of production for the frozen aerated products according to the present invention can be used.

As a source of soy protein in such a process whole soy bean flour, soy protein concentrate soy protein isolate and/or soy milk powder can be used.

Therefore a further embodiment of the present invention relates to a process of production of a frozen aerated products comprising at least one destabilizing emulsifier,

characterized in that a soy product comprising

(i) soy protein and

(ii) less than 25 wt-%, based on the total weight of the soy product, of soy fat

is used.

## Figures:

**Fig.1** shows the meltdown behaviour of ice cream products A-E over a period of 240 minutes at 22°C. A = Emulsifier Free, B = 0.2% HP60%, C = 0.2% HP60, 0.1% PS222, D = 0.2% HP60, 0.2% PS222, E = Dairy Equivalent.

**Fig. 2:** SEM image of example A (No Emulsifier)

**Fig. 3:** SEM image of example D (0.2% HP60, 0.2% PS222)

**Fig. 4** shows the melting behaviour of zero-fat ice cream products F-H over a period of 240 minutes at 22°C. F = No Emulsifier, G = 0.2% HP60, H = 0.15%HP60, 0.15% PS222.

**Fig. 5:** shows the melting behaviour of Products A, B, D & I-L over a period of 240 minutes at 22°C. A = No Emulsifier, B = 0.2% HP60 Only, D = 0.2% HP60, 0.2% PS222, I = lactic acid ester, J = Tween 80, K = unsaturated mono/di-glyceride, L = acetic acid ester of monoglycerides + saturated mono/di-glyceride.

The present invention will now be described further with reference to the following nonlimiting examples. If not otherwise stated the percentages are based on weight.

## Examples:

The ice creams in the following examples were formulated and produced as follows:

Mixing - all ingredients were combined in an agitated heated mix tank. Once all the ingredients had been blended together, the mixture was subjected to high shear mixing at a temperature of at least 65°C for 2 minutes in order to hydrate the stabilisers.

Homogenisation - the mix was then subjected to a homogenisation stage to reduce the bulk of the fat droplets to less than 1μm. This was accomplished by homogenising the mixture using an APV Crepaco 3DDL homogeniser operating at a pressure up to 300 bar at a typical temperature of 70°C.

Pasteurisation - The mix was heated to a temperature of 83°C and held for 20 seconds to achieve satisfactory treatment. The pasteurised mix was then rapidly cooled to 4°C.

Ageing - The mix was held at 4°C for a minimum of 2 hours.

Freezing - the mix was aerated and frozen using a WCB MF75 Freezer with a closed dasher. Sufficient air was incorporated to deliver the desired overrun of 100%. The products were extruded at temperatures between -5°C and -7°C.

For the following experiments the ingredients from Table 2 were used:

**Table 2**

| Ingredient | Class | Supplier | Details |
|---|---|---|---|
| Coconut Oil (refined) | Fat | ADM | Slip melting point 24-27°C |
| Soy Protein Isolate | Protein | ADM | 85% Protein |
| Skimmed Milk Powder | Protein | Dairy Crest | Medium Heat |
| Saturated mono-diglyceride blend | Emulsifier | Danisco | Grinsted Mono-Di HP60 60% Monoglyceride |
| Unsaturated mono-diglyceride and triglyceride blend | Emulsifier | Danisco | Grinsted PS222 , 74% Mono ester Iodine value= 25% |
| Acetem 70 | Emulsifier | Danisco | Acetic acid ester of monoglycerides |
| Tween 80 | Emulsifier | Albion Chemicals | Polyoxyethylene sorbitan fatty acid ester |
| Lactic acid ester | Emulsifier | Danisco | Grinsted Lactam P22, 20-25% Lactic acid |
| Glucose Fructose Syrup | Sugar | Cerestar | LF9 - 63DE |
| Sucrose | Sugar | Albion Chemicals | |
| Corn Syrup | Sugar | Cerestar | Spray Dried - 28DE |
| Inulin | Sugar | Orafti | Beneo ST Inulin |
| Locust bean Gum | Stabiliser | Danisco | Pure Medium Grade |

The products obtained in the examples were analysed using the following methods.

*a. Fat droplet size in Ice cream mixes*

The mix samples were prepared in a solution of Sodium dodecyl sulphate (SDS) (Sigma UK) and urea (Sigma UK) (0.04w/v% 6.6M urea, 0.1% SDS) and then analysed using a Malvern Mastersizer 2000. The SDS/urea solution ensures that any weakly bound or flocculated fat droplets are separated into individual fat droplets; it can not break up fully coalesced or aggregated fat droplets. 2ml of chilled mix were added to 20ml solution of SDS/urea, mixed and left for 10 minutes. The samples were added drop-wise into the Mastersizer 2000 for analysis. The samples were characterised by the surface weighted diameter, $D(3,2)$, which is a measure of the mean fat droplet size.

*b. Determination of Destabilised Fat in ice Cream Products*

Samples of the melted ice cream were prepared using the same method described above. The level of destabilised fat was then calculated as the proportion of fat in the ice cream with a particle size greater than the $d(0,9)$ value from the original mix samples.

*c. Meltdown Behaviour of ice cream products*

Tests were performed on a stainless steel wire mesh grid having a size of 25x25 cm, with 3 mm diameter squares, 1 mm thick wire. Underneath the grid was a collecting vessel (of large enough volume to collect the entire sample tested of the product volume) and balances for weighing the material collected in the vessel. The balances were connected to a data logging system to record the mass collected. The grids were placed in a meltdown cabinet set at a constant temperature environment of 22°C capable of holding up to 12 of these grids simultaneously. For each example, melting tests were performed in triplicate. Before placement in the cabinet the ice cream samples were equilibrated in a freezer at -25°C, and then weighed on a zeroed balance. They were then placed on the mesh grid and were arranged randomly over the available positions in the meltdown cabinet. Once all samples were in place, the data logging system measured the amount of collected material every minute over a 240 minute time period.

*d. Scanning Electron Microscopy (SEM) of Ice cream Products*

The samples were cooled to -80°C on dry ice and a sample section cut. This section, approximately 5mmx5mmx10mm in size, was mounted on a sample holder using a Tissue Tek : OCT™ compound (PVA 11%, Carbowax 5% and 85% non-reactive components). The sample including the holder was plunged into liquid nitrogen slush and transferred to a low temperature preparation chamber: Oxford Instrument CT1500HF. The chamber was under vacuum, approximately $10^{-4}$ bar, and the sample was warmed up to -90°C. Ice was slowly etched to reveal surface details not caused by the ice itself, at this temperature under constant vacuum for 60 to 90 seconds. Once etched, the sample was cooled to -110°C ending the sublimation, and coated with gold using argon plasma. This process also took place under vacuum with an applied pressure of $10^{-1}$ millibars and current of 4 milliamps for 45 seconds. The sample was then transferred to a conventional Scanning Electron Microscope (JSM 5600), fitted with an Oxford Instruments cold stage at a temperature of -160°C. The sample was examined and areas of interest captured via digital image acquisition software.

Example 1: Ice creams comprising soy, coconut oil and emulsifiers

Ice creams were made using formulations A-E given in Table 3. A is a comparative example with no emulsifier. B is a comparative example containing a saturated mono-diglyceride (HP60) which is typically used to make ice cream. C and D are according to the invention and contain PS222, which consists of unsaturated monoglycerides. E is a comparative dairy equivalent example.

**Table 3:** Formulations A - E

| Ingredients (wt%) | A | B | C | D | E |
|---|---|---|---|---|---|
| Water | 59.48 | 59.28 | 59.18 | 59.08 | 59.45 |
| Soy Protein Isolate | 3.20 | 3.20 | 3.20 | 3.20 | 0.00 |
| Skim milk powder | 0.00 | 0.00 | 0.00 | 0.00 | 6.90 |
| Coconut Oil | 5.00 | 5.00 | 5.00 | 5.00 | 5.00 |
| HP60 | 0.00 | 0.20 | 0.20 | 0.20 | 0.15 |
| PS 222 | 0.00 | 0.00 | 0.10 | 0.20 | 0.15 |
| Glucose-Fructose Syrup | 10.0 | 10.0 | 10.0 | 10.0 | 8.00 |
| Sucrose | 14.0 | 14.0 | 14.0 | 14.0 | 12.5 |
| Corn Syrup 28DE | 5.07 | 5.07 | 5.07 | 5.07 | 4.34 |
| Inulin | 3.00 | 3.00 | 3.00 | 3.00 | 3.00 |
| Locust Bean Gum | 0.25 | 0.25 | 0.25 | 0.25 | 0.25 |

*Meltdown behaviour*

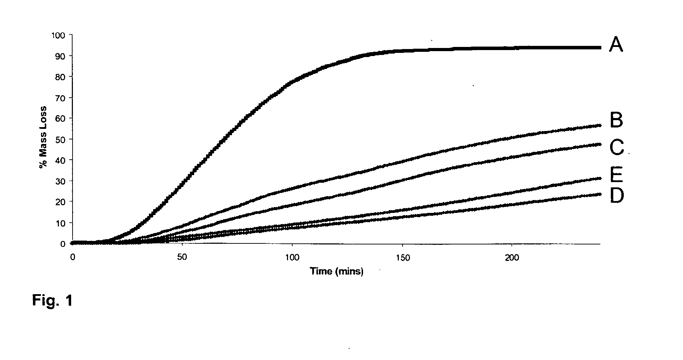

In Fig.1 it can clearly be seen that the meltdown behaviour of the ice cream is improved (i.e. the melting is slower) by the presence of a saturated mono-diglyceride emulsifier (B) relative to A containing no emulsifier. It can be clearly seen that the addition of an unsaturated mono-diglyceride emulsifier (C) further improves the meltdown behaviour. As the amount of this emulsifier is increased (D), the meltdown behaviour of the ice cream is improved even more.

*Mix Drop Size & Destabilised fat*

As can be seen from table 4, surprisingly A-D do not show any significant level of destabilised fat compared to E.

**Table 4:** Drop Size & Destabilised fat

| Example | Mix Dropsize (d[3,2],μm) | Destabilised fat (%) |
|---|---|---|
| A - No Emulsifier | 0.340 | 10.08 |
| B - 0.2% HP60 | 0.344 | 2.68 |
| C - 0.2% HP60, 0.1 % PS222 | 0.287 | 5.06 |
| D - 0.2% HP60, 0.2% PS222 | 0.247 | 8.14 |
| E - Dairy Equivalent | 0.383 | 36.43 |

*SEM Images of the Ice creams*

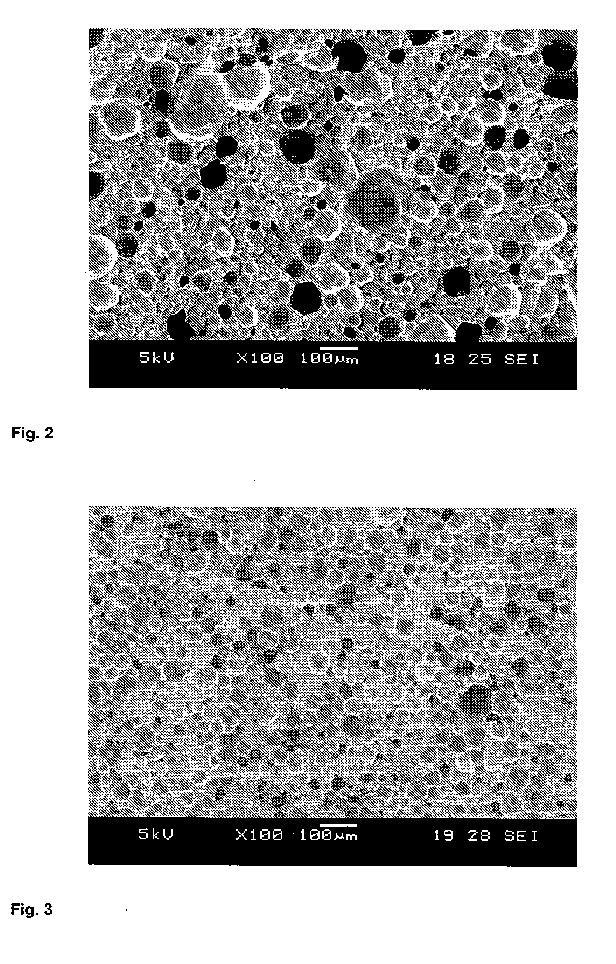

From Fig.2 and Fig.3 it is clear that the ice creams of example D according to the invention have a finer microstructure (smaller gas cells and ice crystals) than the ice cream of comparative example A.

In summary, adding an unsaturated mono/di-glyceride emulsifier leads to an improved meltdown behaviour compared to ice creams containing a standard saturated mono-diglyceride as the only emulsifier.

Example 2: Zero-fat frozen aerated products comprising soy and emulsifier

Zero-fat soy ice creams were made using formulations F, G and H given in table 5 below. F is a comparative example with no emulsifier. G is a comparative example containing saturated mono-diglyceride emulsifier. H is an example according to the invention.

**Table 5:** Formulations F - H

| Ingredient (wt%) | F | G | H |
|---|---|---|---|
| Water | 62.60 | 62.39 | 62.28 |
| Soy Protein Isolate | 3.37 | 3.37 | 3.37 |
| Coconut Oil (refined) | 0.00 | 0.00 | 0.00 |
| HP60 | 0.00 | 0.21 | 0.16 |
| PS 222 | 0.00 | 0.00 | 0.16 |
| Glucose-Fructose Syrup LF9 | 10.53 | 10.53 | 10.53 |
| Sucrose | 14.74 | 14.74 | 14.74 |
| Corn Syrup 28DE | 3.16 | 3.16 | 3.16 |
| Inulin | 5.34 | 5.34 | 5.34 |
| Locust Bean Gum | 0.26 | 0.26 | 0.26 |

*Meltdown behaviour* of *Formulations F - H*

It can be seen in Fig. 4 that Formulation F (no emulsifier) has poor meltdown behaviour, i.e. the product melts rapidly. Formulation G (saturated mono-diglyceride emulsifier) also has poor melt behaviour (e.g. 100% mass loss after 240 minutes). However for Formulation H (saturated and unsaturated mono-diglycerides), there is a significant improvement in the melt behaviour of the product in the presence of an unsaturated mono-diglyceride emulsifer.

Example 3: Ice cream comprising coconut oil, soy protein and different types of emulsifier

Ice creams were made according to formulations I-L shown in table 6 (the same base formulation as A-D) using various different types of emulsifier in order to investigate the effect of the emulsifier type: I= lactic acid ester, K = unsaturated mono/di-glyceride, L = acetic acid ester of monoglycerides + saturated mono/di-glyceride. J = a comparative example using Tween 80, a very powerful emulsifier.

**Table 6:** Formulations I-L

| Ingredient | I | J | K | L |
|---|---|---|---|---|
| Water | 59.48 | 59.68 | 59.38 | 59.09 |
| Soy Protein Isolate | 3.20 | 3.20 | 3.20 | 3.20 |
| Coconut Oil | 5.00 | 5.00 | 5.00 | 5.00 |
| HP 60 | 0.00 | 0.00 | 0.00 | 0.20 |
| PS222 | 0.00 | 0.00 | 0.40 | 0.00 |
| Lactic Acid Ester | 0.30 | 0.00 | 0.00 | 0.00 |
| Tween 80 | 0.00 | 0.10 | 0.00 | 0.00 |
| ACETEM 70 | 0.00 | 0.00 | 0.00 | 0.20 |
| Glucose-Fructose Syrup | 10.0 | 10.0 | 10.0 | 10.0 |
| Sucrose | 14.0 | 14.0 | 14.0 | 14.0 |
| Corn Syrup 28DE | 5.07 | 5.07 | 5.07 | 5.07 |
| Inulin | 3.00 | 3.00 | 3.00 | 3.00 |
| Locust Bean Gum | 0.25 | 0.25 | 0.25 | 0.25 |

*Meltdown behaviour*

The meltdown behaviour for each of the ice creams is shown in Fig.5. In comparison with example A (no emulsifier) and B (where the emulsifier is saturated mono/di-glycerides alone), the ice creams of examples D, I, K and L all have a slower (i.e. preferred) melting behaviour. This is due to the presence of an emulsifier chosen according to the present invention in each of these formulations. Comparative example J also has slow meltdown.

*Mix Drop Size* & *Destabilised fat*

The mix droplet size and destabilised fat produced in each soy ice cream are shown in Table 7. These data show that relatively little destabilised fat is formed during the ice cream shear-freeze process, with the exception of the comparative example containing Tween 80. This has a much higher amount of destabilized fat, even though the emulsifier is only present at a level of 0.1%, due to the fact that Tween 80 is a very powerful emulsifier.

**Table 7:** Mix Dropsize & Destabilised fat

| Example | Mix Dropsize (d[3,2], $\mu$m) | Destabilised Fat (%) |
|---|---|---|
| A - No Emulsifier | 0.340 | 10.08 |
| D - 0.2% HP60, 0.2% PS222 | 0.247 | 8.14 |
| I - 0.3% Lactam P22 | 0.258 | 11.04 |
| J - 0.1% Tween 80 | 0.292 | 30.83 |
| K - 0.4% PS222 | 0.190 | 11.53 |
| L - 0.2% Acetem 70, 0.2% HP60 | 0.233 | 1.4 |

*Microstructure*

SEM images were taken of example L (Acetem 70). They showed air bubbles with a smaller size distribution than in example A.

In summary, soy ice creams containing emulsifiers according to the invention in leads to improved meltdown behaviour compared to a standard saturated mono-diglyceride emulsifier alone. Although comparative example J containing Tween 80 also gave good meltdown, it had much higher levels of destabilised fat, which could result in buttering, especially if the amount of Tween were to be increased, or a freezing process with more shear were to be used.

**Claims**

1. A frozen aerated product comprising a soy product, which comprises (i) soy protein and (ii) less than 25 wt-%, based on the total weight of the soy product, of soy fat, **characterized in that** the frozen aerated product comprises at least one destabilizing emulsifier which is an unsaturated monoglyceride.

2. A frozen aerated product according to claim 1, which is essentially free from milk proteins.

3. A frozen aerated product according to any of the preceding claims, wherein the soy fat content is less than 23 wt-%, based on the total weight of the soy product.

4. A frozen aerated product according to any of the preceding claims, wherein the soy product is whole bean flour, soy protein concentrate and/or soy protein isolate.

5. A frozen aerated product according to any of the preceding claims, wherein the frozen aerated product comprises at least one non-destabilizing emulsifier.

6. A frozen aerated product according to any of the preceding claims comprising up to 25 wt-%, based on the total weight of the frozen aerated product, of a soy product.

7. A frozen aerated product according to any of the preceding claims, wherein the content of the soy protein is up to 10 wt-%, preferably 0.5 - 10wt-%, based on the total weight of the frozen aerated product.

8. A frozen aerated product according to any of the preceding claims comprising up to 1 wt-%, preferably 0.05 - 1 wt-%, based on the total weight of the frozen aerated product, of at least one destabilizing emulsifier.

9. A frozen aerated product according to any of the preceding claims, wherein the frozen aerated is an ice cream, a sherbet, a sorbet or a frozen yoghurt.

10. A frozen aerated product according to any of the preceding claims, wherein the frozen aerated product is an ice cream.

11. A frozen aerated product according to any of the preceding claims, wherein the aerated product additionally comprises fats/oils; sugars; salts; colours and flavours; fruit or vegetable purees, extracts, pieces or juice; stabilisers or thickeners, and/or inclusions.

12. A frozen aerated product according to any of the preceding claims, comprising 0 - 18 wt-%, based on the total weight of the frozen aerated product, of at least one fat/oil, preferably coconut oil, palm oil, palm oil fraction, sunflower oil, and/or butter fat and

   15- 30 wt-%, based on the total weight of the frozen aerated product, of at least one sugar, preferably sucrose, fructose, dextrose, lactose, corn syrups and/or sugar alcohols, and
   40 - 72 wt-%, based on the total weight of the frozen aerated product, of water, and
   0 - 5 wt-%, based on the total weight of the frozen aerated product, of at least one further ingredient such salts; colours and flavours; fruit or vegetable purees, extracts, pieces or juice; stabilisers or thickeners, such as polysaccharides, e.g. locust bean gum, guar gum, carrageenan, microcrystalline cellulose; and inclusions such as chocolate, caramel, fudge, biscuit or nuts.

13. A frozen aerated product according to any of the preceding claims having an overrun of at least 10%, preferably at least 25, more preferably at least 50%.

14. A frozen aerated product according to any of the preceding claims having an overrun from 70 to 150%.

15. A process of production of a frozen aerated product according to any of claims 1 - 14, **characterized in that** a soy product comprising

   (i) soy protein and

(ii) less than 25 wt-%, based on the total weight of the soy product, of soy fat,

is used.

**Patentansprüche**

1. Gefrorenes, mit Luft durchsetztes Produkt, umfassend
ein Sojaprodukt, das (i) Sojaprotein und (ii) weniger als 25 Gew.-%, bezogen auf das Gesamtgewicht des Sojaprodukts, Sojafett umfasst,
**dadurch gekennzeichnet, dass** das gefrorene, mit Luft durchsetzte Produkt mindestens einen destabilisierenden
Emulgator umfasst, bei dem es sich um ein ungesättigtes Monoglycerid handelt.

2. Gefrorenes, mit Luft durchsetztes Produkt nach Anspruch 1, das im Wesentlichen frei von Milchproteinen ist.

3. Gefrorenes, mit Luft durchsetztes Produkt nach einem der vorstehenden Ansprüche, wobei der Sojafettgehalt weniger als 23 Gew.-%, bezogen auf das Gesamtgewicht des Sojaprodukts, beträgt.

4. Gefrorenes, mit Luft durchsetztes Produkt nach einem der vorstehenden Ansprüche, wobei es sich beim Sojaprodukt
um Sojabohnenvollmehl, Sojaproteinkonzentrat und/oder Sojaproteinisolat handelt.

5. Gefrorenes, mit Luft durchsetztes Produkt nach einem der vorstehenden Ansprüche, wobei das gefrorene, mit Luft
durchsetzte Produkt mindestens einen nicht destabilisierenden Emulgator umfasst.

6. Gefrorenes, mit Luft durchsetztes Produkt nach einem der vorstehenden Ansprüche, umfassend bis zu 25 Gew.-
%, bezogen auf das Gesamtgewicht des gefrorenen, mit Luft durchsetzten Produkts, eines Sojaprodukts.

7. Gefrorenes, mit Luft durchsetztes Produkt nach einem der vorstehenden Ansprüche, wobei der Anteil des Sojaproteins bis zu 10 Gew.-%, vorzugsweise 0,5-10 Gew.-%, bezogen auf das Gesamtgewicht des gefrorenen, mit Luft
durchsetzten Produkts, beträgt.

8. Gefrorenes, mit Luft durchsetztes Produkt nach einem der vorstehenden Ansprüche, umfassend bis zu 1 Gew.-%,
vorzugsweise 0,05 bis 1 Gew.-%, bezogen auf das Gesamtgewicht des gefrorenen, mit Luft durchsetzten Produkts,
mindestens eines destabilisierenden Emulgators.

9. Gefrorenes, mit Luft durchsetztes Produkt nach einem der vorstehenden Ansprüche, wobei es sich beim gefrorenen,
mit Luft durchsetzten Produkt um Eiscreme, Fruchteis, ein Sorbet oder gefrorenen Joggurt handelt.

10. Gefrorenes, mit Luft durchsetztes Produkt nach einem der vorstehenden Ansprüche, wobei es sich beim gefrorenen,
mit Luft durchsetzten Produkt um Eiscreme handelt.

11. Gefrorenes, mit Luft durchsetztes Produkt nach einem der vorstehenden Ansprüche, wobei das gefrorene, mit Luft
durchsetzte Produkt Fette/Öle; Zucker; Salze; farbgebende Mittel und Aromastoffe; Pürees, Extrakte, Stücke oder
Saft von Obst oder Gemüse; Stabilisatoren oder Verdickungsmittel und/oder Einschlussprodukte handelt.

12. Gefrorenes, mit Luft durchsetztes Produkt nach einem der vorstehenden Ansprüche, umfassend
0-18 Gew.-%, bezogen auf das Gesamtgewicht des gefrorenen, mit Luft durchsetzten Produkts, mindestens eines
Fetts/Öls, vorzugsweise Kokosöl, Palmöl, eine Palmölfraktion, Sonnenblumenöl und/oder Butterfett und
15-30 Gew.-%, bezogen auf das Gesamtgewicht des gefrorenen, mit Luft durchsetzten Produkts, mindestens eines
Zucker, vorzugsweise Saccharose, Fructose, Dextrose, Lactose, Maissirup und/oder Zuckeralkohole, und
40-72 Gew.-%, bezogen auf das Gesamtgewicht des gefrorenen, mit Luft durchsetzten Produkts, Wasser und
0-5 Gew.-%, bezogen auf das Gesamtgewicht des gefrorenen, mit Luft durchsetzten Produkts, mindestens eines
weiteren Bestandteils, wie Salze; farbgebende Mittel und Aromastoffe; Pürees, Extrakte, Stücke oder Saft von Obst
oder Gemüse; Stabilisatoren oder Verdickungsmittel, wie Polysaccharide, z.B. Johannisbrotkernmehl, Guargummi,
Carrageenan, mikrokristalline Cellulose und Einschlussprodudkte, wie Schokolade, Karamell, Fondant, Biskuit oder
Nüsse.

13. Gefrorenes, mit Luft durchsetztes Produkt nach einem der vorstehenden Ansprüche mit einem Overrun von mindestens 10 %, vorzugsweise mindestens 25 und insbesondere mindestens 50 %.

**14.** Gefrorenes, mit Luft durchsetztes Produkt nach einem der vorstehenden Ansprüche mit einem Overrun von 70 bis 150 %.

**15.** Verfahren zur Herstellung eines gefrorenen, mit Luft durchsetzten Produkts nach einem der Ansprüche 1-14, **dadurch gekennzeichnet, dass** ein Sojaprodukt verwendet wird, das Folgendes umfasst:

(i) Sojaprotein und
(ii) weniger als 25 Gew.-%, bezogen auf das Gesamtgewicht des Sojaprodukts, eines Sojafetts.

## Revendications

**1.** Produit aéré glacé comprenant un produit de soja, qui comprend (i) une protéine de soja et (ii) moins de 25 % en poids, rapporté au poids total du produit de soja, de graisse de soja,
**caractérisé en ce que** le produit aéré glacé comprend au moins un émulsifiant déstabilisant qui est un monoglycéride insaturé.

**2.** Produit aéré glacé selon la revendication 1, qui est essentiellement exempt de protéines de lait.

**3.** Produit aéré glacé selon l'une quelconque des revendications précédentes, dans lequel la teneur en graisse de soja est inférieure à 23 % en poids rapporté au poids total du produit de soja.

**4.** Produit aéré glacé selon l'une quelconque des revendications précédentes, dans lequel le produit de soja est de la farine de soja complète, un concentré de protéine de soja et/ou un isolat de protéine de soja.

**5.** Produit aéré glacé selon l'une quelconque des revendications précédentes, dans lequel le produit aéré glacé comprend au moins un émulsifiant non-déstabilisant.

**6.** Produit aéré glacé selon l'une quelconque des revendications précédentes, comprenant jusqu'à 25 % en poids, rapporté au poids total du produit aéré glacé, d'un produit de soja.

**7.** Produit aéré glacé selon l'une quelconque des revendications précédentes, dans lequel la teneur de la protéine de soja est jusqu'à 10 % en poids, de préférence de 0,5 - 10 % en poids, rapporté au poids total du produit aéré glacé.

**8.** Produit aéré glacé selon l'une quelconque des revendications précédentes comprenant jusqu'à 1 % en poids, de préférence de 0,05 à 1 % en poids, rapporté au poids total du produit aéré glacé, d'au moins un émulsifiant déstabilisant.

**9.** Produit aéré glacé selon l'une quelconque des revendications précédentes, dans lequel le produit aéré glacé est une crème glacée, un sherbet, un sorbet ou un yaourt glacé.

**10.** Produit aéré glacé selon l'une quelconque des revendications précédentes, dans lequel le produit aéré glacé est une crème glacée.

**11.** Produit aéré glacé selon l'une quelconque des revendications précédentes, dans lequel le produit aéré comprend de plus des graisses/huiles ; des sucres ; des sels ; des colorants et des arômes ; des purées de fruits ou de légumes, des extraits, des morceaux ou du jus ; des stabilisants ou des épaississants, et/ou des inclusions.

**12.** Produit aéré glacé selon l'une quelconque des revendications précédentes, comprenant
0-18 % en poids, rapporté au poids total du produit aéré glacé, d'au moins une graisse/huile, de préférence l'huile de noix de coco, l'huile de palme, une fraction d'huile de palme, l'huile de tournesol, et/ou la graisse de beurre et 15-30 % en poids rapporté au poids total du produit aéré glacé, d'au moins un sucre, de préférence du saccharose, du fructose, du dextrose, du lactose, des sirops de maïs et/ou des alcools de sucre ; et 40-72 % en poids, rapporté au poids total du produit aéré glacé, d'eau, et
0-5 % en poids, rapporté au poids total du produit aéré glacé, d'au moins un autre ingrédient tel que des sels ; des colorants et des arômes ; des purées de fruits ou de légumes, des extraits, des morceaux ou du jus ; des stabilisants ou des épaississants, tels que des polysaccharides, par exemple de la gomme de caroube, de la gomme guar, du carraghénane, de la cellulose microcristalline ; et des inclusions, tels que du chocolat, du caramel, du fudge, du biscuit ou des noisettes.

13. Produit aéré glacé selon l'une quelconque des revendications précédentes présentant un dépassement d'au moins 10 %, de préférence d'au moins 25, encore mieux d'au moins 50 %.

14. Produit aéré glacé selon l'une quelconque des revendications précédentes présentant un dépassement de 70 à 150 %.

15. Procédé de production d'un produit aéré glacé selon l'une quelconque des revendications 1-14, **caractérisé en ce que** l'on utilise un produit de soja comprenant

    (i) une protéine de soja et
    (ii) moins de 25 % en poids, rapporté au poids total du produit de soja, de graisse de soja.

**Fig. 1**

**Fig. 2**

**Fig. 3**

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0086032 A

- EP 0271963 A

### Non-patent literature cited in the description

- **WAGGLE, D. H. ; KOLAR, C. W.** Soy protein and human nutrition, proceedings of a symposium held. *Keystone Colourado,* 22 May 1978, 19-51
- **ANDERSON, JOHNSTONE ; COOK-NEWELL.** *N. Engl. J. Med.,* 1995, vol. 333 (5), 276-82
- **FRIEDECK et al.** *Journal of Food Science,* 2003, vol. 68, 2651-7

- The stability of aerated milk protein emulsions in the presence of small molecule surfactants. *Journal of Dairy Science,* 1997, vol. 80, 2631-2638
- Food Macromolecules and Colloids. R. Soc. Chem, 215
- **C. CLARKE.** The Science of Ice Cream. R. Soc. Chem, 2004, 114-115